# NEUE EUROPÄISCHE PATENTSCHRIFT

(11) **EP 0 183 912 B2**
(45) Veröffentlichungstag und Bekanntmachung des Hinweises auf die Entscheidung über den Einspruch: **25.06.1997**
(45) Hinweis auf die Patenterteilung: 20.09.1989
(21) Anmeldenummer: 85109129.8
(22) Anmeldetag: 22.07.1985
(51) Int. Cl.: C09J 201/00, C09J 7/00, D06N 3/00, A43B 23/08

(54) **Neues Versteifungsmaterial mit Schmelzklebereigenschaften**
Stiffening material with hot melt adhesive properties
Matière raidissante collant par fusion

(30) Priorität: 03.12.1984 US 677296; 04.03.1985 US 708059
(43) Veröffentlichungstag der Anmeldung: 11.06.1986
(73) Patentinhaber: Giulini Chemie GmbH, D-67029 Ludwigshafen (DE)
(72) Erfinder: Brehmer, Harald, Dipl.-Ing., D-6701 Neuhofen (DE); Wilding, Emil, D-6701 Birkenheide (DE)
(74) Vertreter: Grussdorf, Jürgen, Dr.

(56) Entgegenhaltungen:
- DE-A- 2 621 195
- DE-A- 3 404 701
- DE-A- 3 447 920
- FR-A- 2 223 995
- GB-A- 2 015 004
- US-A- 3 316 573
- US-A- 3 692 023
- US-A- 3 778 251
- US-A- 3 973 284
- US-A- 4 049 483
- US-A- 4 144 223
- US-A- 4 151 155
- US-A- 4 175 177
- US-A- 4 240 415
- US-A- 4 273 115
- US-A- 4 483 333
- J.R. Dunn, Bends of Elastomers and thermoplastics, A Review, British Library (Juni 1976)
- P.J. Cloud, The role of fille5rs and reinforcements in plastics, Machine Design, 94-97, 18 September 1975
- Polymer-coated rubber filler offers high reinforcement, low cost, British Plastics & Rubber, 9, Juni 1980
- Smit & Sue, Mechanical Properties of thermoplastic filled polyester composits, 38th Annual Technical Conference, New York, Mai 1980
- Ziegel & Romanov, Modulus Reinforcement in elastomer composites. II. Polymeric fillers, J. Applied Polymer Sci., Vol. 17, 1133-1142, April 1973

## Beschreibung

Gegenstand der vorliegenden Erfindung ist ein neues Versteifungsmaterial mit Schmelzkiebereigenschaften, insbesondere für Schuhteile, sowie ein Verfahren zu seiner Herstellung.

Thermoplastische Versteifungsmaterialien sind bekannt, sie werden in der Schuhindustrie schon seit langem eingesetzt. Zweckmäßigerweise werden sie in Bahnfom hergestellt und in daraus hergestellten Zuschnitten zum Versteifen des Fersenbereiches, gegebenenfalls auch Spitzenbereiches, verwendet. Unter Hitzeeinwirkung sind die Zuschnitte verformbar, wobei das Versteifungsmaterial so beschaffen sein soll, daß nach der Verformung und Abkühlung sowohl eine gute Formhaltung als auch eine gute Flexibilität des Formlings gewährleistet ist.

Die Versteifungsmaterialien können weiterhin ein- oder beidseitig mit thermoplastischen Klebstoffen beschichtet sein, so daß sie während bzw. nach der Verformung auch mit dem Schaft und/oder Futtermaterial im Schuh verklebbar sind.

Die thermoplastischen Versteifungsmaterialien können bekanntlich auf verschiedene Weise hergestellt werden, z. B. durch Aufstreichen der Beschichtungsmaterialien als Dispersion, Lösung oder Schmelze auf textile Gewebe, Gewirke, Vliese oder Gewirre. Auch durch Aufkaschieren von Folien auf Gewebeunterlagen können Versteifungsbahnen erzeugt werden, neuerdings auch durch Extrusion von geeignetem thermoplastischen Material.

In der DE-PS 26 21 195 sind nun Versteifungsmaterialien beschrieben, die durch Aufschmelzen von pulverförmigen Mischengen aus Kunststoff (Bindemittel) und Füllstoff auf textile Gewebe oder Vliese hergestellt werden. Für die Herstellung ist wesentlich, daß die pulverförmigen Füllstoffe in einer Komgrößenverteilung vorliegen, die mit der Komgrößenverteilung des Kunststoffpulvers vergleichbar ist, wobei die Komgrößenverteilung jeweils zwischen 50 und 500 µm, vorzugsweise zwischen 100 und 400 µm liegt. Bei Einhaltung dieser Parameter kann der Füllstoff in einer Menge bis zu 100 Vol%, bezogen auf das Volumen des Kunststoffpulvers, eingesetzt werden, ohne daß das Zusammenschmelzen der Kunststoffteilchen erschwert oder verhindert wird.

Versteifungsmaterialien nach der DE-PS 26 21195 sind zwar im Temperaturbereich von 50 bis 80 °C verformbar, ohne zusätzliche Maßnahmen jedoch mit dem Schaft oder Futtermaterial nicht verklebbar. Sie müssen zum Verkleben erst noch mit einer Klebschicht versehen werden, beispielsweise mit einem Heißschmelzkieber auf einer oder beiden Seiten, was heute als nachteilig angesehen wird.

Es stellte sich somit die Aufgabe, ein Versteifungsmaterial aus einem Füllstoff enthaltenden Bindemittel zu finden, das im Verarbeitungsbereich von etwa 50-80°C sowohl verformbar als auch unmittelbar verklebbar ist.

Überraschenderweise kann die gestellte Aufgabe mit einem Versteifungsmaterial gelöst werden, das aus 30 bis 80 Gew.% Füllstoff und 70 bis 20 Gew.% Bindemittel, besteht, wobei die Füllstoffteilchen ganz oder mindestens auf ihrer Oberfläche aus Kunststoff aufgebaut sind, sich im geschmolzenen Bindemittel nicht auflösen und in einer Korngrößenverteilung von 50 bis 500 µm, insbesondere 100 bis 400 µm, vorliegen, und das Bindemittel im Temperaturbereich von etwa 50-80°C thermoplastisch verformbar ist und Schmelzkiebereigenschaften aufweist. Nach einer besonders vorteilhaften Ausführungsform der Erfindung beträgt der Füllstoffanteil in der Mischung 40 bis 60 Gewichtsprozent und der Bindemittelanteil 60 bis 40 Gew.%.

Als Bindemittel werden ausschließlich solche eingesetzt, die im Temperaturbereich von etwa 50-80°C sowohl thermisch verformbar als auch Schmelzkleber sind. Derartige Bindemittel sind auf dem Markt, jedoch werden sie als Versteifungsmaterialien in der Schuhindustrie bis heute nicht eingesetzt. Genannt werden an dieser Stelle vor allem Poymerisate und Copolymerisate aus cyclischen Estem sowie Mischungen dieser Polymerisate. Polymerisate aus cyclischen Estem sind u. a. beschrieben in der UP-PS 37 78 251 und der CA-PS 1 027 838. In beiden Patenschriften werden sie ein- oder beidseitig als Klebfilme auf üblichen Versteifungsmaterialien eingesetzt, zum Beispiel auf solchen aus Styrol - Butadien - Copolymerisaten und auf Copolymerisate aus Vinylchlorid und einem Alpha-Olefin, wobei sie mit Viskositätsverbesserem, Füllstoffen und anderen Zusätzen modifiziert sein können.

Die Verformungstemperatur der erfindungsgemäß eingesetzten Bindemittel liegt ebenfalls im Temperaturbereich von 50-80 °C. Bei Poly-epsilon-Caprolacton liegt sie z. B. bei 60 °C.

Als Bindemittel eignen sich weiterhin elastomere Polyurethane sowie modifizierte Polyolefine, z. B. Polyethylenvinylacetat. Auch sind Ionomere als Bindemittel einsetzbar.

Das Bindemittel, das sowohl die Verklebung der Füllstoffteilchen bei der Herstellung des Versteifungsmaterials als auch die spätere Verklebung mit den Schuhteilen bewirkt, ist vorzugsweise Poly-epsilon-Caprolacton, das sowohl in Pulverform als auch in granulierter Form eingesetzt werden kann. Wird es in Pulverform eingesetzt, dann mit einer Komgrößenverteilung zwischen 50 und 500 µm. insbesondere zwischen 100 und 400 µm, also in einer mit der Komgrößenverteilung des Füllstoffpulvers vergleichbaren Verteilung.

Die Füllstoffteilchen bestehen in dem neuen Versteifungsmaterial aus Kunststoff, insbesondere aus Kunststoffabfällen. Besonders geeignet sind z. B. Hart-PVC-Teilchen und Copolymerisate aus Vinylchlorid und einem Alpha-Olefin oder aus Styrol und Butadien bzw. aus Acrylnitril, Butadien und Styrol.

Zusammenfassend kann as dieser Stelle gesagt werden, daß die erfindungsgemäß als Füllstoffe eingesetzten Kunststoffe im wesentlichen solche sind, die sich aufgrund ihrer Schmelzeigenschaften allein nicht oder nur sehr schwer nach Verfahren der Pulvertechnik zu flächenhaften Gebilden verarbeiten lassen.

Auch können die üblichen anorganischen Füllstoffe eingesetzt werden, wenn sie mit einer Kunststoffschicht gemäß vorstehender Definition überzogen sind. Derartige anorganische oder organische Füllstoffe können z. B. sein: Kreide, Kaolin, Quarzmehl, Holz- und Korkmehl.

Das neue Versteifungsmaterial kann nach verschiedenen Verfahren hergestellt werden, z. B. nach einem Verfahren der Pulvertechnik, im Gießverfahren, Siebdruckverfahren, Preß-, und Preßspritzverfahren oder Extrusionsverfahren. Auch kann die Pulvermischung auf ein Trägermaterial ein- oder beiseitig aufgeschmolzen werden, z. B. auf textile Gewebe, Vliese und Gewirre oder auf Schuhteile. Eine Verklebung mit dem Trägermaterial bei der Extrusion kann ebenfalls durchgeführt werden.

Das Pulvergemisch kann nach jedem bekanntem Verfahren erhitzt werden, z. B. Strahlungswärme, Infrarot- oder Hochfrequenzheizung, Mikrowellenheizung oder induktive Heizung.

Ein unabdingbares Merkmal der vorliegenden Erfindung ist, daß sich die Füllstoffteilchen während des Schmelzvorganges im Bindemittel nicht lössen, sondern wie anorganische Füllstoffe erhalten bleiben. Nur so können die günstigen Eigenschaften des Bindemittels gewhart bleiben. Außerdem muß das Bindemittel auf dem Füllstoff fest haften. Ein geringfügiges Anlösen der Füllstoffteilchen bzw. Erweichen der Füllstoffteilchen in der Schmelze wird sich jedoch nicht in jedem Fall vermeiden lassen.

Der Vorteil des neuen Versteifungsmaterials wird vor allem darin gesehen, daß es an jeder beliebigen Schnittfläche verklebbar ist, da es aus einer Vielzahl von Teilchen besteht, die mit Schmelzkleber umhüllt sind, so daß jedes Teilchen ein Versteifungsmaterial mit Schmetzklebereigenschaften ist Der Verarbeitungsprozeß wird dadurch wesentlich vereinfacht, z. B. braucht ein mechanisch ausgedünntes (geschärftes) Versteifungsmaterial nicht mehr nachträglich mit Kleber versehen werden.

Art, Form und Menge der Füllstoffteilchen können die Eigenschaften des Endproduktes stark beeinflussen, vor allem seine Steifigkeit und sein Viskositätsverhalten bei Erwärmung. Durch die zugesetzten Füllstoffteilchen können Viskosität und Steifigkeit des Endproduktes stark erhöht werden, so daß ein Fließen des Bindemittels bei der thermoplastischen Verformung mit Sicherheit vermieden wird. Die physikalischen Eigenschaften des Endproduktes werden aber nicht nur durch die Füllstoffmenge stark beinflußt, sondern auch durch die Gestalt der Teilchen. So hat sich z. B. gezeigt, daß plättchenförmige Teilchen besonders viskositätssteigernd wirksam sind.

Anhand der nachstehenden Beispiele soll der Gegenstand der Erfindungen nun näher beschrieben werden. Die Warenzeichen werden des solche anerkannt.

### Beispiel 1

Folienabfälle aus schlagfest modifiziertem Hart-PVC werden auf einer geeigneten Zerkleinerungsanlage so vermahlen und fraktioniert, daß die Kantenlängen der Teilchen zwischen 100 und 400 µm liegen. Hochmolekulares Polycaprolacton der Formel 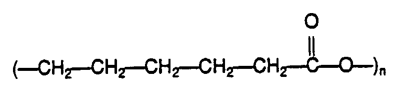 und einem Molekulargewicht von 40 000, das unter der Bezeichnung PCL 700 von der Firma Union Carbide geliefert wird, wird ebenfalls auf eine Teilchengröße von 100 bis 400 µm gemahlen.

500 GT PCL 700 werden dann mit 500 GT Hart-PVC-Pulver auf einem geeigneten Pulvermischer vermischt. Auf einer Walzenstreichmaschine wird dann ein 60 g/m² schweres Baumwollgewebe mit einer Leinwandbindung (1:1) mit 700 g/m² Pulvergemisch beschichtet. Die anschließende Erhitzung erfolgt in einem Infrarotfeld, und zwar wird die Pulvermischung auf etwa 150°C erhitzt. Die Warenbahn bleibt so lange im Infrarot-Streckenkanal, bis das PCL 700 vollständig aufgeschmolzen ist Im plastischen Zustand wird die Warenbahn durch einen kalten Glättekalander geführt und nach der Abkhühlung auf eine Rolle aufgewickelt.

### Beispiel 2

Regenerat-Granulat aus Acrylnitril-Butadien-Styrol-Copolymerisat (Novodur KL 1-5202 der Bayer AG) wird auf einer Mahlanlage auf eine Korngrößenverbeilung zwischen 100 und 500 µm (0,1-0,5 mm) gemahlen. Dieses Pulver wird wie im Beispiel 1 mit gemahlenem PCL 700 gemischt, jedoch werden anstelle von 50 Gew.% 60 Gewichtsprozent PCL 700 eingesetzt.

Mit dem Gemisch wird eine negative Silikonform gefüllt, die zur Herstellung von Fersenversteifungen in Schuhen vorgesehen ist. Die Silikonform ist so beschaffen, daß Fersenversteifungen gebildet werden, die an den seitlichen und oberen Rändern auf nahezu 0,01 mm ausgedünnt sind.

Die mit Pulver gefüllte Form wird unter Druck mit Hilfe eines Hochfrequenzgenerators (40 000 mHz/40 kW/h) während 20 Sek. erhitzt und anschließend 20 Sek. abgekühlt Die gebrauchsfertige Schuhversteifung wird nach Abkhühlung der Silikonform entnommen.

### Beispiel 3

Auf einer Extruderanlage wurde das Pulvergemisch aus Beispiel 1 derart plastifiziert, daß nur das PCL 700 flüssig war. Bei Austritt aus der Breitschlitzdüse lag die Temperatur der Schmelze bei etwa 100 °C. Die Dicke der Folie betrug 0,9 mm. Nach Abkühlung wurde die Folie auf eine Rolle aufgewickelt.

### Beispiel 4

Auf einer kontinuierlich arbeitenden Knetmaschine, welche für die Zugabe mehrerer Komponenten in unterschiedlichen Verfahrensstufen geeignet ist, wurde PCL 700 in der Anlieferungsform (Granulat) als erste Komponente eingegeben. Nach Aufheizung schmolz das PCL bei 140°C. Die Schmelze wurde kurz vor dem Extrusionswerkzeug in der letzten Knetzone schonend mit 40 Gew.% gemahlenem Acrylnitril-Butadien-Styrol-Copolymerisat versetzt, ohne daß eine Auflösung oder Zerkleinerung des Füllstoffes stattfand. Die Korngrößenverteilung des Füllstoffes lag zwischen 100 und 500 µm (0,1 bis 0,5 mm). Die Schmelze wird dann wie im Beispiel 3 extrudiert und auf eine Rolle aufgewickelt.

### Beispiel 5

Wie im Beispiel 4 wird ein Gemisch aus PCL 700 und Acrylnitril-Butadien-Styrol-Copolymerisat hergestellt, jedoch wird die Schmelze portionsweise abgestochen und im noch verformbaren Zustand in eine gekühlte Form oder mehrere Formen gedrückt. Zum Schluß wird der Formling herausgenommen.

### Beispiel 6

Ein Schmelzkieber, bestehend aus 65 Gew.% PCL 700, 21 Gew.% Phenolharz (SP-560, hergestellt von Schenectady Chemical Inc.) mit einem Schmelzpunkt von 150°C und einer Dichte von 1,10 bei 25°C, 10 Gew.% EVA und 4Gew.% mikrokristallinem Wachs, wird auf einer Mahlanlage vermahlen, und zwar auf eine Teilchengröße von 100 bis 400 µm. Anschließend werden 500 GT des Schmelzklebers (Bindemittel) und 500 GT Hart-PVC-Pulver mit einer Teilchengröße von 100 bis 400 µm auf einem Pulvermischer vermischt. Die Pulvermischung wird wie im Beispiel 1 auf einer Walzenstreichmaschine weiter verarbeitet.

### Beispiel 7

Regeneriertes, granuliertes Copolymerisat, bestehend aus Acrylnitril, Butadien und Styrol (Novodur KL 1-5202, hergestellt von Bayer AG) wird auf einer Mahlanlage auf eine Komgrößenverteilung zwischen 100 und 500 µm vermahlen. Das Pulver wird wie im Beispiel 1 mit gemahlenem PCL 700 gemischt, jedoch werden anstelle von 50 Gew.% 60 Gew.% PCL 700 eingesetzt.

Eine Silikonform, die zur Herstellung von Fersenversteifungen in Schuhen vorgesehen ist, wird mit dem Pulvergemisch gefüllt, und zwar im Siebdruckverfahren. Die Silikonform ist so beschaffen, daß Versteifungen gebildet werden, die an den seitlichen und oberen Rändern auf nahezu 0,01 mm ausgedünnt sind.

Die mit Pulver gefüllte Form wird mit Hilfe eines Hochfrequenzgenerators (40 000 MHz/40 KW/h) erhitzt und anschließend abgekühlt Die gebrauchsfertige Schuhversteifung wird nach Abkhühlung der Silikonform entnommen.

## Patentansprüche

1. Durch Aufschmeizen des Bindemittels, das Füllstoff und ggf. weitere Zusätze enthält, hergestelltes Versteifungsmaterial, dadurch gekennzeichnet, daß das Bindemittelgemenge aus 30 bis 80 Gewichtsprozent Füllstoff und 70 bis 20 Gewichtsprozent Bindemittel besteht, wobei die Füllstoffteilchen ganz oder mindestens auf ihrer Oberfläche aus Kunststoff aufgebaut sind sich im geschmolzenen Bindemittel nicht auflösen und in einer Korngrößenverteilung von 50 bis 500 µm, insbesondere 100 bis 400 µm, vorliegen, und das Bindemittel im Temperaturbereich von etwa 50-80 °C thermoplastisch verformbar ist und Schmelzklebereigenschaften aufweist.

2. Versteifungsmaterial nach Anspruch 1, dadurch gekennzeichnet, daß das Bindemittel ein Polymerisat aus einem cyclischen Ester oder ein Copolymerisat dieses Esters ist.

3. Versteifungsmaterial nach Anspruch 2, dadurch gekennzeichnet, daß das Bindemittel Polyepsilon-Caprolacton ist.

4. Versteifungsmaterial nach Anspruch 1, dadurch gekennzeichnet, daß das Bindemittel ein elastomeres Polyurethan ist.

5. Versteifungsmaterial nach Anspruch 1, dadurch gekennzeichnet, daß das Bindemittel ein modifiziertes Polyolefin, insbesondere Poly-ethlenvinylacetat ist.

6. Versteifungsmaterial nach den Ansprüchen 1 bis 5, dadurch gekennzeichnet, daß der Füllstoff Hart-PVC ist.

7. Versteifungsmaterial nach den Ansprüchen 1 bis 5, dadurch gekennzeichnet, daß der Füllstoff ein Copolymerisat aus Arylnitril, Butadien und Styrol ist.

8. Versteifungsmaterial nach den Ansprüchen 1 bis 5, dadurch gekennzeichent, daß der Füllstoff ein Copolymerisat aus Vinylchlorid und einem alpha Olefin ist.

9. Versteifungsmaterial nach den Ansprüchen 1 bis 8, dadurch gekennzeichnt, daß der Füllstoffanteil 40-60 Gew.% und der Bindemittelanteil 60-40 Gew.% beträgt.

10. Verfahren zur Herstellung eines Versteifungsmaterial nach den Ansprüchen 1 bis 9 durch Extrusion eines geschmolzenen, Füllstoffe und ggf. weitere Zusätze enthaltendes Bindemittels, dadurch gekennzeichnet, daß ein Bindemittel, das im Temperaturbereich von 50 bis 80°C thermoplastisch verformbar ist und Schmelzklebereigenschaften aufweist, im Extruder geschmolzen, mit 30 bis 80 Gew.% Füllstoff, vermischt und dann zu ein Folie extrudiert und abgekühlt wird, wobei die Füllstoffteilchen ganz oder mindestens auf ihrer Oberfläche aus Kunststoff bestehen und in einer Korngrößenverteilung von 50 bis 500 µm, insbesondere 100 bis 400 µm, vorliegen und sich im geschmolzenen Bindemittel nicht auflösen.

11. Verfahren zur Herstellung eines Versteifungsmateriales nach den Ansprüchen 1 bis 9, durch Aufbringung einer pulverförmigen Mischung, bestehend aus Bindemittel, Füllstoff und ggf. aus weiteren Zusätzen wie Farbpigmente und anderen Hilfstoffe, auf ein textiles Gewebe, Gewirke, Vlies oder Gewirr als Trägermaterial und Schmelzen des Bindemittels sowie Glätten des beschichteten Trägermaterials vor dem Erkalten, dadurch gekennzeichnet, daß auf das Trägermaterial eine pulverförmige Mischung aufgebracht wird, die aus 30 bis 80 Gew.% Füllstoff und 70 bis 20 Gew.% Bindemittel besteht, wobei die Füllstoffteilchen ganz oder mindestens auf ihrer Oberfläche aus Kunststoff bestehen und in einer mit der Korngrößenverteilung des Ausgangsbindemittels vergleichbaren Korngrößenverteilung von 50 bis 500 µm, insbesondere 200 bis 400 µm, vorliegen und sich im geschmolzenen Bindemittel nicht auflösen und das Bindemittel im Temperaturbereich von etwa 50 bis 80°C thermoplastisch verformbar ist und Schmelzklebereigenschaften aufweist.

12. Verfanren zur Herstellung eines Versteifungsmaterials nach den Ansprüchen 1 bis 9 durch Gießen eines geschmolzenen, Füllstoffe und ggf. weitere Zusätze enthaltenden Bindemittels in Formen und Abkühlung vor Herausnanme des Formlings, dadurch gekennzeichnet daß ein Bindemittel, das im Temperaturbereich von 50 bis 80°C thermoplastisch verformbar ist und Schmelzklebereigenschaften aufweist, geschmolzen, mit 30 bis 80 Gew.% Füllstoff vermischt und dann in die Form gegossen und der Formling unter Druck gebildet wird, wobei die Füllstoffteilchen ganz oder mindestens auf ihrer Oberfläche aus Kunststoff bestehen und in einer Korngrößenverteilung von 50 bis 500 µm, insbesondere 100 bis 400 µm, vorliegen und sich im geschmolzenen Bindemittel nicht auflösen.

13. Verfahren zur Herstellung eines Versteifungsmaterials nach den Ansprüchen 1 bis 9 durch Gießen eines geschmolzenen, Füllstoffe und ggf. weitere Zusätze enthaltenden Bindemittels in Formen und Abkhühlung vor Herausnahme des Formlings, dadurch gekennzeichnet, daß das Bindemittel einer pulverförmigen Mischung, bestehend aus 30 bis 80 Gew.% Füllstoff und 70 bis 20 Gew.% Bindemittel, geschmolzen und dann in die Form gegossen wird, wobei die Füllstoffteilchen ganz oder mindestens auf ihrer Oberfläche aus Kunststoff bestehen und in einer Korngrößenverteilung von 50 bis 500 µm, insbesondere 100 bis 400 µm, vorliegen und sich im geschmolzenen Bindemittel nicht auflössen und das Bindemittel im Temperaturbereich von 50 bis 80°C thermoplastisch verformbar ist und Schmelzklebereigenschaften aufweist.

14. Verfahren zur Herstellung eines Versteifungsmaterials nach den Ansprüchen 1 bis 9 durch Eingabe eines pulverförmigen Gemisches, bestehend aus Bindemittel, Füllstoffen und ggf. weiteren Zusätzen, in eine Form, Schmelzen des Gemisches durch Erhitzen in der Form und Abkühlung vor Herausnahme des Formlings, dadurch gekennzeichnet, daß ein pulverförmiges Gemisch in die Form gegeben wird, das aus 30 bis 80 Gew.% Füllstoff und 70 bis 20 Gew.% Bindemittel besteht, wooei die Füllstoffteilchen ganz oder mindestens auf ihrer Oberfläche aus Kunststoff bestehen und in einer mit der Korngrößenverteilung des Ausgangsbindemittels vergleichbaren Korngrößenverteilung von 50 bis 500 µm, insbesondere 200 bis 400 µm, vorliegen und sich im geschmolzenen Bindemittel nicht auflösen und das Bindemittel im Temperaturbereich von etwa 50 bis 80°C thermoplastisch verformbar ist und Schmelzklebereigenschaften aufweist.

15. Verfahren zur Herstellung eines Versteifungsmaterials nach den Ansprüchen 1 bis 9 durch Verarbeitung eines pulverförmigen Gemisches. bestehend aus Bindemittel, Füllstoffen und ggf. weiteren Zusätzen, im Siebdruckverfahren, Schmelzen des Gemisches durch Erhitzen und anschließende Abkühlung, dadurcn gekennzeicnnet, daß ein pulverförmiges Gemisch im Siebdruck verabeitet wird, das aus 30 bis 80 Gew.% Füllstoff und 70 bis 20 Gew.% Bindemittel besteht, wooei die Füllstoffteilchen ganz oder mindestens auf ihrer Oberfläche aus Kunststoff bestenen und in einer mit der Korngrößenverteilung des Ausgangsbindemittels vergleichbaren Korngrößenverteilung von 50 bis 500 µm, insbesondere 200 bis 400 µm vorliegen, und sich im geschmolzenen Bindemittel nicht auflösen und das Bindemittel im Temperaturbereich von etwa 50 bis 80°C thermoplastisch verformbar ist und Schmelzklebereigenschaften aufweist.

16. Verfahren zur Herstellung eines Versteifungsmaterials nach den Ansprüchen 10 bis 15, dadurch gekennzeichnet, daß als weitere Zusätze in der Bindemittel und Füllstoffe enthaltenden Mischung Farbstoffe, Antistatica, und andere bekannte Stoffe eingesetzt werden.

## Claims

1. Stiffening material manufactured by melting onto it a bonding agent which contains filler and possibly further additives, characterised in that the bonding agent mixture contains 30 to 80% by weight of filler and 70 to 20% by weight of bonding agent, wherein the filler particles consist entirely, or at least on their surfaces, of synthetic material, do not dissolve in the molten bonding agent and have a particle size distribution of 50 to 500 µm, more particularly 100 to 400 µm, and in that the bonding agent is thermoplastically mouldable in the temperature range of approximately 50 to 80°C and has the properties of a melt adhesive.

2. Stiffening material according to claim 1, characterised in that the bonding agent is a polymer of a cyclic ester or a copolymer of this ester.

3. Stiffening material according to claim 2, characterised in that the bonding agent is a poly-ε-caprolactone.

4. Stiffening material according to claim 1, characterised in that the bonding agent is an elastomeric polyurethane.

5. Stiffening material according to claim 1, characterised in that the bonding agent is a modified polyolefin, more particularly polyethylene vinyl acetate.

6. Stiffening material according to any one of claims 1 to 5, characterised in that the filler is a hard PVC.

7. Stiffening material according to any one of claims 1 to 5, characterised in that the filler is a copolymer of acrylonitrile, butadiene and styrene.

8. Stiffening material according to any one of claims 1 to 5, characterised in that the filler is a copolymer of vinyl chloride and an α-olefin.

9. Stiffening material according to any one of claims 1 to 8, characterised in that the share of the filler is 40 to 60% by weight and that the share of the bonding agent is 60 to 40% by weight.

10. Process for manufacturing a stiffening material according to any one of claims 1 to 9 by moulding by extrusion a molten bonding agent containing fillers and possibly other additives, characterised in that a bonding agent which is thermoplastically workable in the temperature range of 50 to 80°C and which has the properties of a fusion adhesive is molten in an extruder, mixed with 30 to 80% by weight of filler and then moulded by extrusion into a film and cooled, the filler particles consisting entirely, or at least on their surfaces, of synthetic material and having a particle size distribution of 50 to 500 µm, more particularly 100 to 400 µm, and that they do not disintegrate in the molten bonding agent.

11. Process for manufacturing a stiffening material according to any one of claims 1 to 9, by applying a powdery mixture, which consists of a bonding agent, filler and possibly further additives, such as colouring pigments and other adjuvants, to a woven fabric, knitted fabric, fleece or twisted material as carrier material and by melting the bonding agent as well as smoothing the coated carrier material before cooling down, characterised in that a powdery mixture consisting of 30 to 80% by weight of filler and 70 to 20% by weight of 'bonding agent is applied to the carrier material, the filler particles consisting entirely, or at least on their surfaces, of synthetic material and having a particle size distribution of 50 to 500 µm, more particularly of 200 to 400 µm, which is comparable to the particle size distribution of the initial bonding agent, said filler particles not disintegrating in the molten bonding agent, and in that the bonding agent is thermoplastically workable in the temperature range of approximately 50 to 80°C and has the properties of a melt adhesive.

12. Process for manufacturing a stiffening material according to any one of claims 1 to 9 by pouring a molten bonding agent containing fillers and possibly further additives into moulds and cooling before removal of the moulded article, characterised in that a bonding agent being thermoplastically mouldable in the temperature range of 50 to 80°C and having the properties of a fusion adhesive is molten, mixed with 30 to 80% by weight of filler and then poured into the mould and in that the moulded article is formed under pressure, while the filler particles consist entirely, or at least on their surfaces of synthetic material, have a particle size distribution of 50 to 500 µm, more particularly 100 to 400 µm, and do not disintegrate in the molten bonding agent.

13. Process for manufacturing a stiffening material according to any one of claims 1 to 9 by pouring a molten bonding agent, containing fillers and possibly further additives, into moulds and cooling before removal of the moulded article, characterised in that the bonding agent of a powdery mixture, containing 30 to 80% by weight of filler and 70 to 20% by weight of bonding agent, is molten and then poured into the mould, the filler particles consisting entirely, or at least on their surfaces of synthetic material and having a particle size distribution of 50 to 500 µm, more particularly 100 to 400 µm, said filler particles not disintegrating in the molten bonding agent, characterised in that the bonding agent is thermoplastically workable in the temperature range of 50 to 80°C and has the properties of a melt adhesive.

14. Process for manufacturing a stiffening material according to any one of claims 1 to 9 by adding a powdery mixture, which consists of bonding agents, fillers and possibly further additives, into a mould, by melting of the mixture by heating in the mould and by cooling before removal of the moulded article, characterised in that a powdery mixture, consisting of 30 to 80% by weight of filler and 70 to 20% by weight of bonding agent, is poured into the mould, the filler particles consisting entirely, or at least on their surfaces of synthetic material and having a particle size distribution of 50 to 500 µm, more particularly 200 to 400 µm which is comparable to the particle size distribution of the initial bonding agent, said filler particles not disintegrating in the molten bonding agent, and in that the bonding agent is thermoplastically workable in the temperature range of approximately 50 to 80°C and has the properties of a melt adhesive.

15. Process for manufacturing a stiffening material according to any one of claims 1 to 9 by processing, using screen printing, a powdery mixture, consisting of bonding agents, fillers and possibly further additives, by melting the mixture through heating and subsequent cooling, characterised in that a powdery mixture, consisting of 30 to 80% by weight of filler and 70 to 20% by weight of bonding agent is processed by screen printing, the filler particles consisting entirely, or at least on their surfaces of synthetic material and having a particle size distribution of 50 to 500 µm, more particularly 200 to 400 µm, which is comparable to the particle size distribution of the initial bonding agent, said fillers particles not disintegrating in the molten bonding agent, and in that the bonding agent is thermoplastically workable in the temperature range of approximately 50 to 80°C and has the properties of a melt adhesive.

16. Process for manufacturing a stiffening material according to any one of claims 10 to 15, characterised in that antistatica and other known substances are used as further additives in the mixture containing the bonding agent and fillers.

## Revendications

1. Matériau raidisseur ou de renfort produit par fusion du liant qui contient une matière de charge et, éventuellement, d'autres additifs, caractérisé en ce que le mélange de liant est constitué de 30 à 80% en poids de matière de charge et de 70 à 20% en poids de liant, les particules de matière de charge étant constituées, entièrement ou au moins à leur surface, de matière plastique, ne se dissolvant pas dans le liant fondu et présentant une granulométrie de 50 à 500 µm et, en particulier, de 100 à 400 µm, et le liant étant déformable thermoplastiquement dans la gamme de températures d'environ 50 à 80°C et présentant les propriétés d'une colle à fusion.

2. Matériau raidisseur selon la revendication 1, caractérisé en ce que le liant est un polymère d'un ester cyclique ou un copolymère de cet ester.

3. Matériau raidisseur selon la revendication 2, caractérisé en ce que le liant est du poly-epsilon-caprolactone.

4. Matériau raidisseur selon la revendication 1, caractérisé en ce que le liant est un polyuréthane élastomère.

5. Matériau raidisseur selon la revendication 1, caractérisé en ce que le liant est une polyoléfine modifiée et, en particulier, de polyéthylène-acétate de vinyle.

6. Matériau raidisseur selon les revendications 1 à 5, caractérisé en ce que la matière de charge est du PVC dur.

7. Matériau raidisseur selon les revendications 1 à 5, caractérisé en ce que la matière de charge est un copolymère d'acrylonitrile, de butadiène et de styrène.

8. Matériau raidisseur selon les revendications 1 à 5, caractérisé en ce que la matière de charge est un copolymère de chlorure de vinyle et d'une oléfine-alpha.

9. Matériau raidisseur selon les revendications 1 à 8, caractérisé en ce que la proportion de matière de charge est de 40 à 60% en poids et celle de liant de 60 à 40% en poids.

10. Procédé de production d'un matériau raidisseur selon les revendications 1 à 9, par extrusion d'un liant fondu contenant des matières de charge et, éventuellemnt, d'autres additifs, caractérisé en ce qu'un liant qui est déformable plastiquement dans la gamme de températures de 50 à 80°C et qui présente des propriétés de colle à fusion est fondu dans une extrudeuse, est mélangé à 30 à 80% en poids de matière de charge et est extrudé ensuite sous forme de feuille et est refroidi, tandis que les particules de matière de charge sont constituées, entièrement ou au moins à leur surface, de matière plastique et présentent une granulométrie de 50 à 500 µm et, en particulier, de 100 à 400 µm, et qu'elles ne se dissolvent pas dans le liant fondu.

11. Procédé de production d'un matériau raidisseur selon l'une des revendications 1 à 9, par application d'un mélange en poudre constitué d'un liant, d'une matière de charge et éventuellemnt d'autres additifs tels que pigments colorés et autres adjuvants, sur un tissu, un produit tricoté, une nappe de fibre ou un produit textile maillé servant de matériau-support avec fusion du liant ainsi que lissage du matériau-support enduit avant le refroidissement, caractérisé en ce que l'on applique sur le matériau-support un mélange en poudre constitué de 30 à 80% en poids de matière de charge et de 70 à 20% en poids de liant, tandis que les particules de matière de charge sont constituées, entièrement ou au moins à leur surface, de matière plastique et présentent une granulométrie comparable à celle du liant servant de matière première, c'est-à-dire de 50 à 500 µm et, en particulier, de 200 à 400 µm et ne se dissolvent pas dans le liant fondu et que le liant est déformable thermoplastiquement dans la gamme de températures d'environ 50 à 80°C et présente des propriétés de colle à fusion.

12. Procédé de production d'un matériau raidisseur selon l'une des revendications 1 à 9, par moulage d'un liant fondu contenant des matières de charge et, éventuellement, d'autres additifs, dans des moules, avec refroidissement avant l'extraction des pièces de forme, caractérisé en ce qu'un liant, qui est déformable thermoplastiquement dans la gamme de températures de 50 à 80°C et qui présente des propriétés de colle à fusion est fondu , est mélangé à 30 à 80% en poids de matière de charge et est ensuite coulé dans le moule, tandis que la pièce de forme est préparée sous pression et que les particules de matière de charge sont constituées, entièrement ou au moins à leur surface, de matière plastique et présentent une granulométrie de 50 à 500 µm et, en particulier, de 100 à 400 µm et ne se dissolvent pas dans le liant fondu.

13. Procédé de production d'un matériau raidisseur selon les revendications 1 à 9, par coulée d'un liant fondu contenant des matières de charge et, éventuellement,d 'autres additifs, dans des moules avec refroidissement avant l'extraction de la pièce de forme, caractérisé en ce que le liant est un mélange en poudre constitué de 30 à 80% en poids de matière de charge et de 70 à 20% en poids de liant, qui est fondu et ensuite coulé dans le moule, tandis que les particules de matière de charge sont constituées totalement, ou au moins à leur surface, de matière plastique et présentent une granulométrie de 50 à 500 µm et, en particulier, de 100 à 400 µm et ne se dissolvent pas dans le liant fondu et que le liant est déformable thermoplastiquement dans la gamme de températures de 50 à 80°C et présente des propriétés de colle à fusion.

14. Procédé de production d'un matériau raidisseur selon les revendications 1 à 9, en introduisant un mélange en poudre constitué d'un liant, de matière de charge et, éventuellement, d'autres additifs dans un moule, en fondant le mélange par chauffage dans le moulé et en le refroidissant avant l'enlèvement de la pièce moulée, caractérisé en ce que l'on introduit dans le moule un mélange constitué de 30 à 80% en poids de matière de charge et de 70 à 20% en poids de liant, tandis que les particules de matière de charge sont constituées, entièrement ou au moins leur surface, de matière plastique et présentent une granulométrie comparable à la granulométrie du liant servant de matière première et comprise entre 50 et 500 µm et, en particulier, entre 200 et 400 µm et qui ne se dissolvent pas dans le liant fondu et que le liant est déformable thermoplastiquement dans la gamme de températures d'environ 50 à 80°C et présente des propriétés de colle à fusion.

15. Procédé de production d'un matériau raidisseur selon les revendications 1 à 9, par mise en oeuvre d'un mélange en poudre constitué d'un liant, de matière de charge et, éventuellement, d'autres additifs suivant le procédé par sérigraphie, fusion du mélange par chauffage et refroidissement ultérieur, caractérisé en ce que l'on met en oeuvre un mélange en poudre-par sérigraphie, qui est constitué de 30 à 80% en poids de matière de charge et de 70 à 20% en poids de liant, tandis que les particules de matière de charge sont constituées, entièrement ou au moins à leur surface, de matière plastique et présentent une granulométrie comparable à la granulométrie du liant servant de matière première et comprise entre 50 et 500 µm et, en particulier, entre 200 et 400 µm, et ne se dissolvent pas dans le liant fondu, et que le liant est déformable thermoplastiquement dans la gamme de températures d'environ 50 à 80°C et présente des propriétés de colle à fusion.

16. Procédé de production d'un matériau raidisseur selon les revendications 10 à 15, caractérisé en ce que l'on utilise comme autres additifs dans le mélange contenant le liant et les matières de charge, des colorants, des antistatiques et d'autres substances connues.
